# EUROPEAN PATENT APPLICATION

(11) **EP 4 124 779 A1**
(43) Date of publication of application: **01.02.2023**
(21) Application number: 21187759.2
(22) Date of filing: 26.07.2021
(51) Int. Cl.: F16H 47/04, F03C 1/40, F04B 49/06, F16H 61/4096, F16H 61/4148, F16H 61/421, F16H 61/431

(54) **A HYDRAULIC TRANSMISSION**

(71) Applicant: Danfoss Scotland Ltd, Loanhead, Midlothian EH20 9TB (GB)
(72) Inventor: Stein, Uwe Bernhard Pascal, Loanhead Midlothian, EH20 9TB (GB); Rampen, William Hugh Salvin, Loanhead Midlothian, EH20 9TB (GB); Caldwell, Niall, Loanhead Midlothian, EH20 9TB (GB)
(74) Representative: Keil & Schaafhausen Patentanwälte PartGmbB

(57) **Abstract**

A hydraulic transmission (1) connected to a prime mover (2), and comprising an input shaft (A), a first hydraulic machine (4), a second hydraulic machine (6), each of the hydraulic machines comprising a plurality of working chambers having a volume which varies cyclically with rotation of a respective rotatable shaft, a hydraulic circuit (14, 34, 47, 48) extending between a group of one or more working chambers of the first hydraulic machine and the second hydraulic machine, each working chamber of each hydraulic machine comprising a low-pressure valve which regulates the flow of hydraulic fluid between the working chamber and a low-pressure manifold and a high-pressure valve which regulates the flow of hydraulic fluid between the working chamber and a high-pressure manifold, each hydraulic machine being configured to actively control at least the low-pressure valves of the group of one or more working chambers to select the net displacement of hydraulic fluid by each working chamber on each cycle of working chamber volume, and thereby the net displacement of hydraulic fluid by the group of one or more working chambers, responsive to a demand signal.

In such a hydraulic transmission it should be possible to recover energy.

To this end a rotatable shaft of the first hydraulic machine (4) or the input shaft (A) is in driven engagement with a first input/output shaft of a speed/torque summing assembly (5), a rotatable shaft of the second hydraulic machine (6) is in driven engagement with a second input/output shaft of the speed/torque summing assembly (5), and the output shaft (7) is in driven engagement with a third input/output shaft of the speed/torque summing assembly (5).

## Description

The present invention relates to a hydraulic transmission according to the preamble of claim 1.

Such a hydraulic transmission can be used, for example, for driving a vehicle, like a tractor or a truck, or a winch drum of a winch system.
One skilled in the art will recognise these components may together define a hydro mechanical powersplit transmission, in the field of continuously variable transmissions. Being a powersplit transmission, there is a dual energy path somewhere between the prime mover and the driven or driving element or elements (a hydraulic, and a mechanical one). In the case of a vehicle, the input shaft is connected to a prime mover, for example an internal combustion machine.

The speed/torque summing assembly can be, for example, in form of an epicyclic gear box. An epicyclic gear box comprises a sun gear meshing with a number of planet gears which are arranged on a planet carrier. The planet gears in turn mesh with a ring gear. These three elements, namely sun gear, planet carrier, and ring gear each form an input/output of the speed/torque summing assembly. The speed/torque summing assembly can then add the speeds of two of the input/output which added speed can be used at the third of the input/outputs. From an alternative viewpoint, the speed/torque summing assembly can add the torques of two of the input/output and provide it at the third of the input/outputs.

There are several possibilities to connect the hydraulic machine, the input shaft and the output shaft to the speed/torque summing assembly. When the input shaft is connected to the first hydraulic machine and the first hydraulic machine is connected to a first input/output of the speed/torque summing assembly, such an arrangement is termed "input coupled". When the input shaft is directly coupled to the speed/torque summing assembly and the third input/output of the speed/torque summing assembly is connected to a first hydraulic machine, such an arrangement is termed "output coupled".

All inputs/outputs of the speed/torque assembly can in principle be used to input a torque or to output a torque. It depends on the way of connection which function is used.

The hydraulic transmission is used to drive a vehicle, and alternately there are situations, in which the vehicle drives the transmission, for example, when the vehicle applies a negative torque during run downhill or during stopping the vehicle.

However, in a hydraulic transmission it is difficult to recover energy.

The object underlying the invention is to enable the hydraulic transmission to recover energy.

This object is solved with a hydraulic transmission as defined in claim 1.

In this way it is possible to use the second hydraulic machine arrangement not only as motor, when the vehicle is driven, but also as pump, when the vehicle drives the transmission, i.e. produces a torque which is directed into the hydraulic transmission. When the second hydraulic arrangement is operated as pump, the pressure of the hydraulic fluid in the hydraulic circuit will increase. A hydraulic machine as defined in claim 1 is also called "digital displacement machine". A digital displacement machine comprises for each pressure chamber, for example for each cylinder, a valve assembly controlling the flow of hydraulic fluid into and out of the pressure chamber. Thus, it is possible to control the displacement of each pressure chamber. When, for example, the pressure chamber is formed by a cylinder and a piston moving in the cylinder, the volume of hydraulic fluid moved during each stroke of the piston can be varied between a volume corresponding to the full stroke and a zero volume. When, for example, a volume corresponding to the full stroke is desired, an input valve of the valve is open during a suction stroke of the piston and closed during a stroke of the piston on the opposite direction, while an output valve of the valve assembly is closed during the suction stroke and open during the stroke of the piston in the opposite direction. When, for example, only 50% of the volume should be moved, the input valve is open for 50% of the suction stroke of the piston and closed for the rest of the stroke, while the output valve is open for the complete stroke of the piston in the opposite direction. Other modes of operation are possible. A displacement can be separately controlled for each cylinder or pressure chamber. In this way it is possible to adjust precisely the volume and the pressure of the hydraulic fluid which is supplied by the hydraulic machine when the hydraulic machine is operated as pump and it is possible to adjust precisely the volume and the pressure of the hydraulic fluid which is consumed by the hydraulic machine, when the hydraulic machine is operated as motor.

In an embodiment of the invention the hydraulic circuits, of each of the first and second hydraulic machines, are firstly constituted by a respective low pressure manifold which connects to one or more tanks, and secondly constituted by a respective high pressure manifold, which connects the two hydraulic machines, and said circuits are fixed in the sense that the flow to or from either hydraulic machine to or from a respective (low or high) pressure manifold, never reverses, during their normal operation (even during vehicle reverse). Neither of the first and second hydraulic machines are machines with fixed commutation. Thus, in such arrangement, the ports of at least the second machine would switch(swap) when the vehicle direction reversed.

In an embodiment of the invention at least one of the hydraulic machines, in particular the first hydraulic machine, is fluidly connected to a hydraulic accumulator by means of the valve arrangement, and comprises a hydraulic motor section which is connected to the hydraulic accumulator by means of a valve arrangement, where said hydraulic motor section is a portion of the hydraulic machine which is capable of motoring. The first hydraulic machine can, for example, be connected to a prime mover. When in certain situations additional energy is needed, the pressure from the hydraulic accumulator can be used to drive the first hydraulic machine in addition to the driving torque of the prime mover. However, if the pressure in the accumulator is high enough, this pressure can also be directly be input into the hydraulic circuit. When, for example, the second hydraulic machine is operated as pump, the pressure increases and this increased pressure can be stored in the accumulator, if necessary or desired. However, loading and unloading of the accumulator is controlled by a valve arrangement, so that it is possible, for example, to store the elevated pressure until it is advantageous to use it. As described above, the hydraulic machine can comprise one or more piston/cylinder units, said units may be configured to be capable of solely pumping, or capable of selecting between pumping and motoring. The section, or portion, of the hydraulic machine may in one embodiment be the whole/entire hydraulic machine.

In an embodiment of the invention at least part of at least one of the hydraulic machines can be operated as motor supplied with hydraulic fluid from the accumulator. When, for example, one of the hydraulic machines is operated as pump and produces a higher pressure in the hydraulic fluid, a situation can arise in which this pressure is so high that the difference between the pressure produced by the pump and the pressure of the hydraulic fluid in the accumulator is so low that the potential energy stored in the accumulator cannot successfully be transferred in a kinetic energy. In this case it is of advantage to use the energy stored in the accumulator to drive a motor which in turn can give an additional torque input to drive the vehicle.

In an embodiment of the invention at least the hydraulic machine connected to the hydraulic accumulator by means of the valve arrangement comprises a hydraulic motor section connected to the hydraulic accumulator by means of the valve arrangement. The motor section of the hydraulic machine can be a separate motor connected to the other parts of the first hydraulic machine or it can be an integral motor section. When additional energy is needed, the valve arrangement can simply connect the hydraulic accumulator to this motor section, so that the hydraulic fluid under elevated pressure can drive this motor section and can introduce an additional torque which is added to the torque inputted or produced by the remaining sections of the hydraulic machine.

In an embodiment of the invention the input shaft comprises a releasable clutch. The hydraulic transmission can be separated from the prime mover, when the energy stored in the accumulator is sufficient to drive the vehicle or when the vehicle is running downhill. In both cases it is not necessary to operate the prime mover further.

In an embodiment of the invention the clutch is a one-way clutch. This means that the clutch makes a driving connection in one direction of rotation and releases this drive connection in the other direction of rotation. Thus, when the energy stored in the accumulator is sufficient to drive the transmission, the clutch is automatically released.

In an embodiment of the invention the valve arrangement comprises first valve means between the hydraulic accumulator and the first hydraulic machine arrangement and second valve means between the hydraulic accumulator and the second hydraulic machine arrangement. In this case it is possible to control on the one hand a connection between the hydraulic accumulator and the first hydraulic machine arrangement and to control on the other hand a flow between the second hydraulic machine arrangement and the accumulator. In this way it is possible, for example, to control the direction of rotation of the second hydraulic machine arrangement.

In an embodiment of the invention at least one of the valve means is a two-position valve. In other words, this valve is an on-off-valve. This facilitates the control.

In an embodiment of the invention the first valve means and the second valve means are controlled by a common controller. This has two advantages. Only one controller is necessary. The controller can control the two-valve means depending from each other, if necessary.

In an embodiment of the invention the first hydraulic machine is in driven engagement with the output shaft.

In an embodiment of the invention a third hydraulic machine arrangement is in driven engagement with the output shaft. The third hydraulic machine can likewise be connected to the hydraulic accumulator by means of a valve arrangement. It can be used to add additional torque to the output shaft.

In an embodiment of the invention at least one of the hydraulic machines is a radial piston machine. A radial piston machine is a machine in which a number of cylinders are distributed around an axis of rotation. An eccentric is in driven engagement with a main shaft of the machine. When the eccentric rotates, it moves a piston in each cylinder up and down. A radial piston machine is rather short in axial direction and does not require much space in this direction. Thus, the transmission can be made very compact. The driven engagement between two element allows the transmission of a torque from one element to the other one.

In an embodiment of the invention the hydraulic transmission comprises a gear box. The gear box can be in driven engagement with the output shaft or the gear box can be arranged between the input shaft and the speed/torque summing assembly. A gear box having at least two speeds can be used to optimize the rotational speed of the prime mover.

In an embodiment of the invention the gear box comprises at least two gears and during a gear shift the first or second hydraulic machine arrangement is controlled to reduce a torque at the input of the gear box.

In an embodiment of the invention torque is reduced for a predetermined time interval which corresponds to the time required to complete a particular gear shift. This time interval can be determined, for example, through performing measurements of the gearbox, i.e., a form of calibration in the lab before it is shipped.

In an embodiment of the invention torque is reduced for a time interval which corresponds to determination of the completion of a gear shift. Such determination could be, for example, sensing by a sensor which provides feedback. Type could be a 'position sensor'. Alternatively, for example, sensing could be provided by a solenoid back-emf signal (which signal comprises a raft of information), said solenoid being part of the gearbox shifting equipment.

In an embodiment of the invention a predetermined ramp function of pressure (or flow) command is provided to the first and or second hydraulic machines, in order to minimise torque impulse on the driveline. The driveline comprises the torque-connected shafts from the pump to the output shaft which arises from the new gear selection.

In an embodiment of the invention a rotational speed of the second hydraulic machine is controlled by the controller in a range from a negative to a positive speed and a transmission ratio of at least one of the gears is chosen and the hydraulic size of the hydraulic machines is chosen so that during a gear shift during general vehicle acceleration, the second hydraulic machine changes rotational direction speed from its maximum negative speed to its maximum positive speed outside a predetermined speed range of the vehicle.

In an embodiment of the invention the gear shifting occurs outside the predetermined speed range of the vehicle. Thus, most of the time during operation no gear shift is necessary.

In an embodiment of the invention the controller adjusts the rotational speed of the first hydraulic machine so that even during low to zero demand operation the second hydraulic machine is substantially always rotating, in order to maintain a fluid film between moving surfaces to prolong life of the machine. A viable design might allow the second hydraulic machine to stop periodically for a period of time, but still maintain a substantially always rotating configuration.

In an embodiment of the invention the controller coordinates the vehicle transition between forward and reverse travel with the rotational direction reversal of the second hydraulic machine, wherein during said transition the gearbox remains in a first mechanical gear.

The invention relates to a method of operating the hydraulic transmission according to any preceding claim, wherein the prime mover is coupled to a first input shaft of the speed/torque summing assembly being able to add or subtract torque, the first hydraulic machine also in driven engagement with the first input/output shaft, or a second or third of the input/output shafts, of the speed/torque summing assembly. Said first hydraulic machine being operated to convert shaft power into fluid power or to convert fluid power into shaft power, the second hydraulic machine in driven engagement with one of the remaining shafts of the speed/torque summing assembly which shaft is not in driven engagement with the first hydraulic machine, said second hydraulic machine being operated to convert fluid power into shaft power or to convert shaft power into fluid power, the output shaft being in driven engagement with the remaining input/output shaft of the speed/torque summing assembly not in driven engagement with the first or second hydraulic machines,
said transmission being selectively operated in at least one of the following modes;
a first mode where the second hydraulic machine is held static by, e.g. all valves of the second machine are commanded to pump, where the first hydraulic machine is operated in an idle condition, resulting in the natural gear ratio of the speed/torque summing assembly being transferred through,
a second mode where the second hydraulic machine is operated to convert shaft power into fluid power, said fluid power being applied to the first hydraulic machine adding power to input shaft, thereby reducing the speed of the output shaft but increasing its torque,
a third mode where the first hydraulic machine being operated to convert shaft power to fluid power, the second hydraulic machine is operated to convert said fluid power into shaft power rotating in the same direction as the input from the prime mover thereby increasing the rotation speed of the output shaft,
a fourth mode where the first hydraulic machine is operated to convert shaft power into fluid power the second hydraulic machine being operated to convert said fluid power into shaft power rotating in the opposite direction to the input from the prime mover thereby reversing the direction of rotation of the output shaft of the speed/torque summing assembly,
a fifth mode where both the first and second hydraulic machines are operated in an idle mode, thereby allowing the speed and direction of the output shaft of the speed/torque summing assembly, to be independent relative to the input shaft.

Not all modes are necessarily available in all embodiments. These are not 'static' modes, i.e. the transmission may continuously moving from mode to mode in a completely dynamic way. Each of these modes represents a sort of snapshot in time. The first mode is a "Straight through" mode (in the sense of the epicyclic providing the ratio (it's natural ratio), the 'resulting' ratio of the speed/torque summing assembly, between its input and output shaft. In the second mode there is free interchange of fluid and torque. The third mode forms a kind of overdrive mode. The forth mode is a "reverse" mode. The fifth mode is a "neutral" mode. Speed and rotation are independent, like a neutral gear selected in the manual transmission of a car.

Preferred examples of the invention will now be described in more detail with reference to the drawing, in which:
- Fig. 1: shows schematically a first embodiment of a hydraulic transmission,
- Fig. 2: shows schematically a second embodiment of a hydraulic transmission,
- Fig. 3: shows schematically a third embodiment of a hydraulic transmission,
- Fig. 4: shows schematically a fourth embodiment of a hydraulic transmission,
- Fig. 5: shows schematically a fifth embodiment of a hydraulic transmission,
- Fig. 6: shows schematically a sixth embodiment of a hydraulic transmission,
- Fig. 7: shows schematically a seventh embodiment of a hydraulic transmission,
- Fig. 8: is a schematic illustration of a digital displacement machine, and
- Fig. 9: is a diagram showing schematically relations between vehicle speed, gears, and rotational speed of the second hydraulic machine.

The same and similar elements are denoted with the same reference numerals in all Figures.

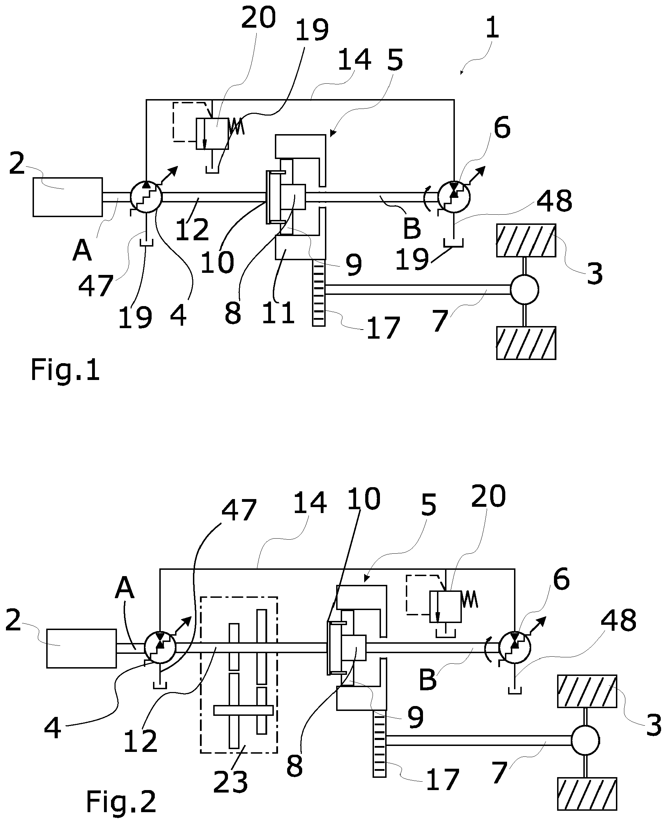

Fig. 1 shows schematically a hydraulic transmission 1 which is arranged between a prime mover 2 and driven elements 3 in form of wheels of a vehicle. It should be noted that the term "driven elements" is used as an abbreviation. When, for example, the vehicle runs downhill or is stopped, the driven elements 3 can also be driving elements.

The hydraulic transmission 1 comprises a first hydraulic machine 4, a speed/torque summing assembly 5, a second hydraulic machine 6 and an output shaft 7.

The speed/torque summing assembly 5 is in form of an epicyclic gear box. The epicyclic gear box comprises a sun gear 8, planet gears 9 meshing with the sun gear 8, which planet gears 9 are arranged on a planet carrier 10. Furthermore, the speed/torque summing assembly 5 comprises a ring gear 11.

The first hydraulic machine 4 comprises an input shaft A and an output shaft 12.

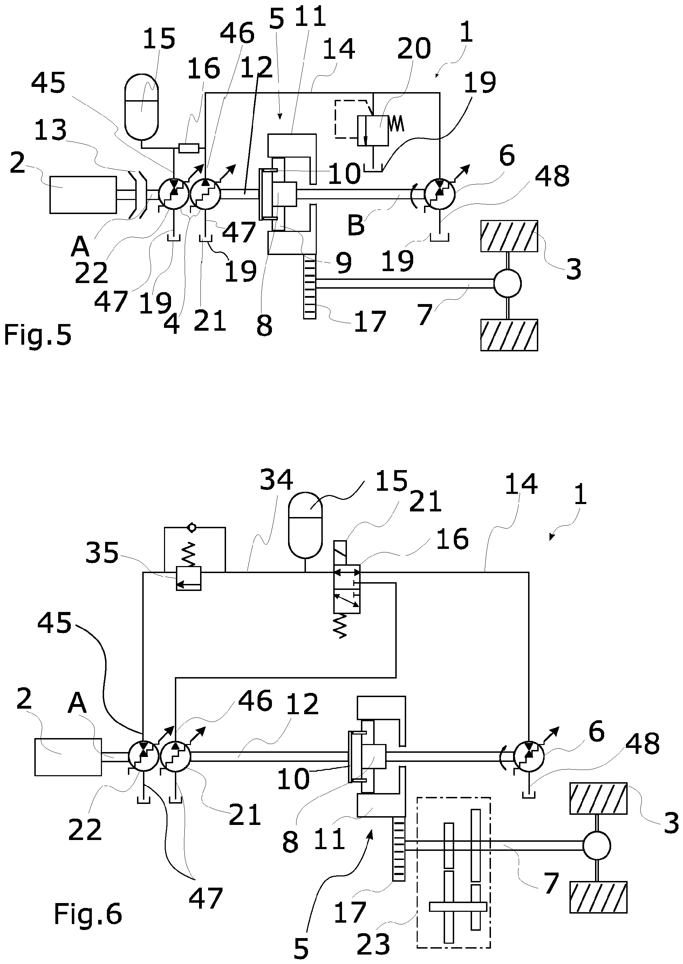

The first hydraulic machine 4 and the second hydraulic machine 6 are connected together by a hydraulic circuit 14. The hydraulic circuit 14 can comprises a hydraulic accumulator 15 and a valve arrangement 16 controlling loading and unloading of the hydraulic accumulator 15, as shown in Fig. 5.

The first hydraulic machine 4 is in driven engagement with the planet carrier 10. The second hydraulic machine 6 is connected to the sun gear 8. The output shaft 7 is in driven engagement with the ring gear 11 by means of a gear wheel 17.

The first hydraulic machine 4 is connected to a tank 19 via a low pressure manifold 47. The second hydraulic machine 6 is connected to the tank 19 (or another tank) via a low pressure manifold 48. The hydraulic circuit 14 is provided with an overpressure valve 20 releasing hydraulic fluid to the tank 19 (or another tank) when the pressure in the hydraulic circuit exceeds a predetermined value.

Fig. 2 shows a second embodiment of the hydraulic transmission in which a gear box 23 has been added. The gear box 23 comprises, e.g. two gears. The gear box 23 is arranged between the first hydraulic machine 4 and the speed/torque summing assembly 5.

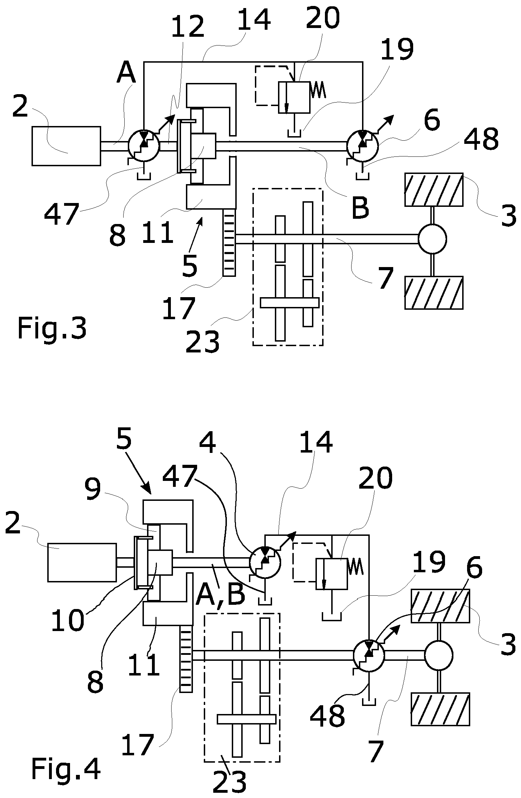

Fig. 3 shows a third embodiment of the hydraulic transmission having also a gear box 23. The gear box 23 comprises, e.g. two gears. In this embodiment the gear box 23 is arranged between the speed/torque summing assembly 5 and the driven elements 3.

Fig. 4 shows a fourth embodiment of a hydraulic transmission in which the prime mover 2 is in driven engagement with the speed/torque summing assembly 5, in this case with the planet carrier 10 of the speed/torque summing assembly 5. The output shaft B of the speed/torque summing assembly 5 forms or is connected to the input shaft A of the first hydraulic machine 4. The second hydraulic machine 6 is arranged between the speed/torque summing assembly 5 and the driven elements 3. The gear box 23 is arranged between the speed/torque summing assembly 5 and the second hydraulic machine 6. It should be noted that the gear box 23 could also be arranged between the prime mover 2 and the speed/torque summing assembly 5 or between the speed/torque summing assembly 5 and the first hydraulic machine 4 or between the second hydraulic machine 6 and the driven elements 3.

Fig. 5 shows a fifth embodiment of a hydraulic transmission 1 having an accumulator 15 and a valve arrangement 16 connecting the hydraulic accumulator 15 and the hydraulic circuit 14. Such an accumulator 15 can also be used in connection with the other embodiments described above.

The valve arrangement 16 can establish or interrupt a hydraulic connection between the hydraulic circuit 14 and the hydraulic accumulator 15. When the pressure of the hydraulic fluid in the hydraulic circuit 14 is higher than the pressure in the hydraulic accumulator 15, the valve arrangement 16 can establish a hydraulic connection between the hydraulic circuit 14 and the hydraulic accumulator 15 in order to load or charge the hydraulic accumulator 15 and to store energy. As long as no additional energy is needed for the operation, the valve arrangement 16 can be kept closed, so that the hydraulic fluid under elevated pressure remains in the hydraulic accumulator 15. The rest of the hydraulic circuit 14 can be normally operated.

When, for example, additional energy is required, the valve arrangement 16 can establish a hydraulic connection between the hydraulic accumulator 15 and the hydraulic circuit 14 to release hydraulic fluid under elevated pressure into the hydraulic circuit 14 to drive the second hydraulic machine 6 which is in this case operated as motor.

The first hydraulic machine 4 comprises two parts or sections. A first part 21 can be operated as pump and as motor. When the input shaft A is driven by the prime mover 2, the first part 21 pumps hydraulic fluid through the hydraulic circuit 14 to the second hydraulic machine 6.

The first hydraulic machine 4 comprises a second part or section 22 which can be operated both as pump and as motor.

The first hydraulic machine 4 and the second hydraulic machine 6 are in all embodiments in form of digital displacement machines. The term "digital displacement machine" is used as an abbreviation. A digital displacement machine is a hydraulic machine having a number of pressure chambers, for example a chamber in a cylinder the volume of which is varied when a piston is moved in the cylinder. The displacement of each cylinder or more generally of each pressure chamber is controlled by a valve assembly which can be opened or closed. The valve assembly can control the input of the pressure chamber, i.e. the flow of hydraulic fluid into the pressure chamber, and the output of the pressure chamber, i.e. the flow of hydraulic fluid out of the pressure chamber. The volume of hydraulic fluid moved between the input and the output can be varied between a volume corresponding to a full stroke of the piston and a volume corresponding to zero. When the full stroke volume should be displaced, an input of the valve assembly is opened during a suction stroke of the piston, i.e. a stroke of the piston in the cylinder increasing the volume of the pressure chamber. An output valve of the valve assembly is open during the whole stroke of the piston in the opposite direction. When other volumes are desired, the opening and closing conditions of the respective valves are changed accordingly.

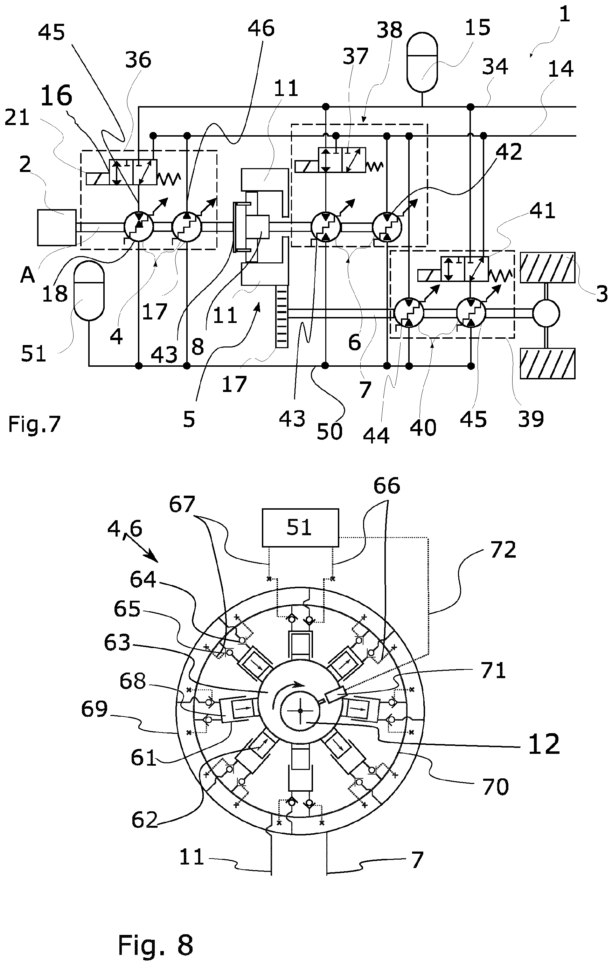

A schematic illustration of a digital displacement machine 4, 6 is shown in Fig. 8. Elements already shown in Fig. 1 to 7 are denoted with the same reference numerals.

The digital displacement machine comprises a number of cylinders 61, which are in the present example arranged in the form of a radial piston machine. A piston 62 is movably arranged in each cylinder 61 and driven by a cam 63. Each cylinder 61 together with its piston 62 defines a pressure chamber 68 which is connected to a high pressure valve 64 and a low pressure valve 65. The high pressure valve 64 is ganged with other valves by manifold 69 and connected to the hydraulic circuit 14 by means of a high pressure line 7 and the low pressure valve is ganged with other valves by manifold 70 and connected to the low pressure manifolds 47, 48 by means of a low pressure line 11. The high pressure valves 64 are connected in a signal transmitting mode to the controller 51 by means of high pressure valve electrical connections 66 and the low pressure valves 65 are likewise connected in a signal transmitting mode to the controller 51 by means of low pressure valve electrical connections 67. A sensor 71 is connected to the controller 51 by means of a sensor line 72. The sensor 71 can be used to detect parameters of the rotation of cam 62, in particular speed and angle of rotation.

The controller 51 can control the valves 64, 65 of the cylinders 61 independently from each other. This means that each pressure chamber can be filled completely or partly during each working stroke or it can displace no hydraulic fluid at all. It is further possible to use some of the cylinders 61 in a pump mode and some of the cylinders 61 in a motor mode at the same time. In this way it is possible to have in single digital displacement machine two sections 23, 24, as described above.

In this way it is possible to operate the hydraulic machines 4, 6 as pump or as motor. It is also possible to operate the hydraulic machines 4,6 in a way that some of the pressure chambers 68 are operated in a pump mode, whereas other pressure chambers are operated in a motor mode. This is schematically shown in Fig. 5, in which the first hydraulic machine is shown with two sections 21, 22.

When one of the two sections 21, 22, for example the first section 21, is operated as motor, it is possible to use the hydraulic fluid stored in the hydraulic accumulator 15 not only to be added directly to the hydraulic circuit 14, but it can also be used to drive the second section 22 of the first hydraulic machine 4, so that the hydraulic pressure in the hydraulic accumulator 15 can be used even when this pressure is lower than the pressure in the hydraulic circuit 14.

To this end a hydraulic connection between the hydraulic accumulator 15 and the hydraulic circuit 14 is interrupted and the hydraulic accumulator 15 is connected to the second section 22 of the first hydraulic machine 4. The pressure in the hydraulic accumulator 15 now drives the second section 22 of the first hydraulic machine 4, so that the first section 22 is operated as motor, the torque of which is added to the torque of the prime mover.

Since the second hydraulic machine 6 is in form of a digital displacement machine, it is not only possible to adjust the torque and the speed of the second hydraulic machine assembly 6, but also the direction of rotation of the second hydraulic machine 6.

The prime mover 2 is connected to the first hydraulic machine 4 via a clutch 13. The clutch 13 can interrupt or establish a driving connection between the prime mover 2 and the first hydraulic machine 4. It can be a one-way clutch transmitting a driving force in one rotational direction only. Such a clutch 13 can be used in all embodiments.

Fig. 6 shows another embodiment of a hydraulic transmission 1 in which the prime mover 2 is again directly in driven engagement with the first hydraulic machine 4. The first hydraulic machine 4 is connected to the planet carrier 10 of the speed/torque summing assembly 5. The second hydraulic machine 6 is connected to the sun gear 8 and the driven elements 3 are connected to the ring gear 11 via the gear 17. A gear box 23 can be arranged between the speed/torque summing assembly 5 and the driven elements 3.

The prime mover 2 drives the first section 21 of the first hydraulic machine 4, wherein the first section 21 is part of a digital displacement machine and is operated as pump. The second section 22 of the first hydraulic machine 4 is also driven by the prime mover 2. The prime mover 2 is in driven engagement with the planet carrier 10. The second hydraulic machine 6 is also in form of a digital displacement machine and can be operated as motor (during driving) or as pump (when the vehicle runs downhill and energy should be stored in the hydraulic accumulator).

During driving operation, the prime mover 2 drives the second section 22 of the first hydraulic machine 4 which supplies hydraulic fluid under pressure to the second hydraulic machine 6 which drives the sun gear 8.

When the vehicle runs downhill, the valve arrangement 16 is switched to connect the first section 21 of the first hydraulic machine 4 to a line 34 of the hydraulic circuit connecting the hydraulic accumulator 15 via an overpressure valve 35 to the second section 22 of the first hydraulic machine 4. When the vehicle is running downhill, the second hydraulic machine 6 is driven via the speed/torque summing assembly 5 and is operated as pump. The fluid pumped by the second hydraulic machine 6 in turn drives the second section 22 of the first hydraulic machine 4 which in turn drives the first section 21 operating as pump. The combined pressure of the first section 21 of the first hydraulic machine 4 and of the second hydraulic machine 6 can then enter the accumulator 15.

Fig. 7 shows schematically a fifth embodiment of a hydraulic transmission 1.

Some elements have been grouped. The first hydraulic machine 4 together with the valve arrangement 16 form a primary drive 36. The second hydraulic machine 6 together with an additional valve 37 form a final drive 38. An optional unit 39 comprises a third hydraulic machine 40 on the output shaft 7 and a further valve 41 which will be explained later.

The second hydraulic machine 6 comprises two sections 42, 43 which are both in form of digital displacement machines or in the form of parts of a single digital displacement machine and are operated as motors during normal operation when the vehicle is driven. The first section 42 of the second hydraulic machine 6 is connected to the hydraulic circuit 14 and supplied with hydraulic fluid from the first section 21 of the first hydraulic machine 4. The second section 43 of the second hydraulic machine 6 is connected via valve 37 to the accumulator line 34 which in turn is connected to the hydraulic accumulator 15.

The same is true for the third hydraulic machine 40. The third hydraulic machine 40 comprises a first section 44 which is directly connected to the hydraulic circuit 14, and a second section 45 which is connected via valve 41 to the accumulator line 34 or to the hydraulic circuit, depending on the switching state of the valve 41. The sections 44, 45 and the valve 41 together form the optional unit 39.

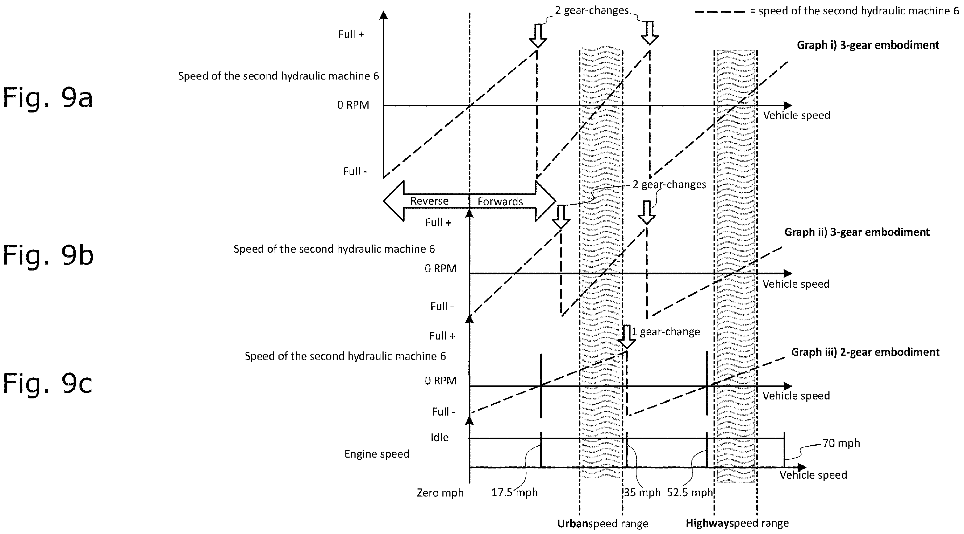

The hydraulic circuit is a closed circuit. The low pressure manifolds of all hydraulic machines 4, 6, 40 are connected to a common low pressure line 50. This low pressure line 50 is fluidly connected to a further pressure compensation vessel 51. Fig. 9 shows three embodiments of the control of the second hydraulic machine 6.

The horizontal axis shows the speed of a vehicle driven by the hydraulic transmission 1. In the vertical direction the rotational speed of the second hydraulic machine 6 is shown in dashed lines. This rotational speed can be positive, for example clockwise, or negative, for example counter-clockwise. Fig 9 shows furthermore two preferred speed ranges of the vehicle, i.e., urban speed and highway speed.

Having typical vehicle operating speeds ('urban', and 'highway') is primarily the domain of on-road vehicles which will run at various legislated speeds, although it is foreseeable that off-road vehicles are also subject to typical vehicle operating speeds (such as working and travelling). Two common speed ranges are shown, although other common speed ranges might be anticipated.

Each gear shift leads to a rotation direction reversal of the second hydraulic machine 6 (between max forward and max reverse speed).

In all cases the rotational speed of the prime mover 2 is constant. One skilled in the art will understand that this is partially to aid explanation of the concept, but may also allow the engine to be run at an optimum speed, and will understand that the speed could be allowed to vary. Optimum speed, could be in terms of fuel economy. In the worst case for the transmission, rotational speed of the prime mover is constant. The constant speed is labelled in the Figure as being 'idle', and one skilled in the art will understand that this encompasses a speed which is above a traditional idle speed, up to for example a speed associated with peak efficiency.

Fig. 9a shows the operation of the hydraulic transmission having a gear box with three gears. Reverse vehicle travel is achieved be selecting first gear, and running the second hydraulic machine 6 in a negative rotation direction. When the vehicle speed command is zero, the commanded rotational speed of the second hydraulic machine 6 is also zero. When the vehicle is accelerated forwards, the rotational speed of the second hydraulic machine 6 increases up to a maximum speed. When this maximum speed of the second hydraulic machine 6 is reached, a first gear shift occurs and the second hydraulic machine direction of rotation reverses, from maximum positive to maximum negative. With the second gear selected, the vehicle accelerates further. Within the "urban speed" range, the speed of the second hydraulic machine 6 has a zero crossing, i.e. it changes the direction of rotation from negative to positive, all the while aiming for a smooth vehicle acceleration. The second hydraulic machine 6 then increases rotational speed further until it reaches again the maximum (positive) speed. In this situation a further gear shift occurs. The second hydraulic machine 6 reverses the direction of rotation from positive to negative and starts rotating with maximum (negative) rotational speed. Then, the vehicle accelerates further, in Fig. 9a to some point beyond highway speed.

It can be seen that the gear shifts occur outside the preferred speed ranges. In this case the zero crossing of the speed of the second hydraulic machine 6 is within the preferred speed ranges.

Vehicle direction transition between forwards and reverse is coordinated with rotation direction reversal of the second hydraulic machine 6 (thus zero vehicle speed is coordinated with zero rotation speed of the second hydraulic machine 6). This represents a 'safer default' of the second hydraulic machine 6, to zero vehicle speed. I.e. failure of motor, to zero rotation speed, also leads to 'safe' vehicle speed of zero.

Fig. 9b shows a similar situation. In this case, the rotational speed of the second hydraulic machine 6 is negative and at maximum (i.e. maximum reverse speed) when the vehicle speed is zero. Gear shift occurs outside the preferred vehicle speed ranges and the zero crossing of the rotational speed of the second hydraulic machine 6 is within the preferred speed ranges.

Fig. 9c shows a hydraulic transmission with a gear box having two gears. At zero speed of the vehicle the rotational speed of the second hydraulic machine 6 is maximum (negative). Zero crossing of the rotational speed of the second hydraulic machine 6, i.e. direction reversal, occurs outside the preferred speed ranges which is preferred. Gear shift between the first gear and the second gear occurs also outside the preferred speed ranges.

## Claims

1. A hydraulic transmission (1) connected to a prime mover (2), and comprising an input shaft (A), a first hydraulic machine (4), a second hydraulic machine (6), each of the hydraulic machines comprising a plurality of working chambers having a volume which varies cyclically with rotation of a respective rotatable shaft, a hydraulic circuit (14, 34, 47, 48) extending between a group of one or more working chambers of the first hydraulic machine and the second hydraulic machine, each working chamber of each hydraulic machine comprising a low-pressure valve which regulates the flow of hydraulic fluid between the working chamber and a low-pressure manifold and a high-pressure valve which regulates the flow of hydraulic fluid between the working chamber and a high-pressure manifold, each hydraulic machine being configured to actively control at least the low-pressure valves of the group of one or more working chambers to select the net displacement of hydraulic fluid by each working chamber on each cycle of working chamber volume, and thereby the net displacement of hydraulic fluid by the group of one or more working chambers, responsive to a demand signal,
the transmission comprising a controller controlling the hydraulic machines, and an output shaft (7), **characterized in that** a rotatable shaft of the first hydraulic machine (4) or the input shaft (A) is in driven engagement with a first input/output shaft of a speed/torque summing assembly (5), a rotatable shaft of the second hydraulic machine (6) is in driven engagement with a second input/output shaft of the speed/torque summing assembly (5), and the output shaft (7) is in driven engagement with a third input/output shaft of the speed/torque summing assembly (5).

2. The hydraulic transmission according to claim 1, **characterized in that** the hydraulic circuits (14, 34, 47, 48), of each of the first and second hydraulic machines, are firstly constituted by a respective low pressure manifold (47, 48) which connects to one or more reservoirs, and secondly constituted by a respective high pressure manifold (14, 34), which connects the two hydraulic machines, and said circuits (14, 34, 47,48) are fixed in the sense that the flow to or from either hydraulic machine to or from a respective (low or high) pressure manifold, never reverses, during their normal operation even during vehicle reverse.

3. The hydraulic transmission according to claim 1 or 2, **characterized in that** at least one of the hydraulic machines (4, 6), in particular the first hydraulic machine, is fluidly connected to a hydraulic accumulator (15) by means of the valve arrangement (16), and comprises a hydraulic motor section (18) which is connected to the hydraulic accumulator (15) by means of the valve arrangement (16), where said hydraulic motor section is a portion of the hydraulic machine which is capable of motoring.

4. The hydraulic transmission according to any of claims 1 to 3, **characterized in that** the first hydraulic machine (4) is in driven engagement with an output shaft (B).

5. The hydraulic transmission according to any of claims 1 to 4, **characterized in that** a third hydraulic machine arrangement (40) is in driven engagement with the output shaft (7).

6. The hydraulic transmission according to any of claims 1 to 5, **characterized in that** it comprises a gear box (23), optionally the gear box (23) is in driven engagement with the output shaft, optionally the gear box is arranged between the input shaft (A) and the speed/torque summing assembly (4).

7. The hydraulic transmission according to claim 6, **characterized in that** the gear box (23) comprises at least two gears and during a gear shift the first or second hydraulic machine (4, 6) is controlled to reduce a torque at the input of the gear box (23).

8. The hydraulic transmission according to claim 7, where torque is reduced for a predetermined time interval which corresponds to the time required to complete a particular gear shift.

9. The hydraulic transmission according to claim 7, where torque is reduced for a time interval which corresponds to determination of the completion of a gear shift.

10. The hydraulic transmission according to any of claims 6 to 9, where a predetermined ramp function of pressure or flow command is provided to the first and or second hydraulic machines, in order to minimise torque impulse on a driveline comprising the torque-connected shafts from the pump to the output shaft 7 which arises from the new gear selection.

11. The hydraulic transmission according to any of claims 6 to 10, **characterized in that** a rotational speed of the second hydraulic machine (6) is controlled by the controller in a range from a negative to a positive speed and a transmission ratio of at least one of the gears is chosen and the hydraulic size of the hydraulic machines (4, 6) is chosen so that during a gear shift during general vehicle acceleration, the second hydraulic machine (6) changes rotational direction speed from its maximum negative speed to its maximum positive speed outside a predetermined speed range of the vehicle.

12. The hydraulic transmission according to any of claims 6 to 11, **characterized in that** the gear shifting occurs outside the predetermined speed range of the vehicle.

13. The hydraulic transmission according to any of claims 1 to 12, **characterized in that** the controller adjusts the rotational speed of the first hydraulic machine (4) so that even during low to zero demand operation the second hydraulic machine (6) is substantially always rotating, in order to maintain a fluid film between moving surfaces to prolong life of the machine.

14. The hydraulic transmission according to any of claims 1 to 13, **characterized in that** the controller coordinates the vehicle transition between forward and reverse travel with the rotational direction reversal of the second hydraulic machine (6), wherein during said transition the gearbox (23) remains in a first mechanical gear.

15. A method of operating the hydraulic transmission according to any preceding claim, wherein the prime mover (2) is coupled to a first input shaft of the speed/torque summing assembly (5) being able to add or subtract torque, the first hydraulic machine (4) also in driven engagement with the first input/output shaft, or a second or third of the input/output shafts, of the speed/torque summing assembly (5), said first hydraulic machine (4) being operated to convert shaft power into fluid power or to convert fluid power into shaft power, the second hydraulic machine (6) in driven engagement with one of the remaining shafts of the speed/torque summing assembly (5) which shaft is not in driven engagement with the first hydraulic machine, said second hydraulic machine (6) being operated to convert fluid power into shaft power or to convert shaft power into fluid power, the output shaft (7) being in driven engagement with the remaining input/output shaft of the speed/torque summing assembly (5) not in driven engagement with the first or second hydraulic machines,
said transmission being selectively operated in at least one of the following modes;
a first mode where the second hydraulic machine is held static by, where the first hydraulic machine (4) is operated in an idle condition, resulting in the natural gear ratio of the speed/torque summing assembly (5) being transferred through,
a second mode where the second hydraulic machine (6) is operated to convert shaft power into fluid power, said fluid power being applied to the first hydraulic machine (4) adding power to input shaft (12), thereby reducing the speed of the output shaft (B) but increasing its torque,
a third mode where the first hydraulic machine (4) being operated to convert shaft power to fluid power, the second hydraulic machine (6) is operated to convert said fluid power into shaft power rotating in the same direction as the input from the prime mover (2) thereby increasing the rotation speed of the output shaft (7),
a fourth mode where the first hydraulic machine (4) is operated to convert shaft power into fluid power the second hydraulic machine (6) being operated to convert said fluid power into shaft power rotating in the opposite direction to the input from the prime mover (2) thereby reversing the direction of rotation of the output shaft (7) of the speed/torque summing assembly (5),
a fifth mode where both the first and second hydraulic machines (4, 6) are operated in an idle mode, thereby allowing the speed and direction of the output shaft (7) of the speed/torque summing assembly (5), to be independent relative to the input shaft (A).
